# EUROPEAN PATENT APPLICATION

(11) **EP 1 221 656 A1**
(43) Date of publication of application: **10.07.2002**
(21) Application number: 01934438.1
(22) Date of filing: 30.05.2001
(51) Int. Cl.: G06F 15/00, G06F 17/60, G06F 13/00

(54) **SYSTEM FOR TRANSMITTING WEB PAGE, METHOD FOR TRANSMITTING WEB PAGE AND RECORDED MEDIUM**

(30) Priority: 30.05.2000 JP 2000160624
(71) Applicant: SEIKO EPSON CORPORATION, Tokyo 160-0811 (JP)
(72) Inventor: SHIBUSAWA, Yasuo, c/o EPSON DIRECT CORPORATION, Suwa-Shi, Nagano 392-8502 (JP); OSHIMA, Yasuhiro, c/o EPSON DIRECT CORPORATION, Suwa-Shi, Nagano 392-8502 (JP); GOTO, Eriko, c/o SEIKO EPSON CORPORATION, Suwa-Shi, Nagano 392-8502 (JP); HAJI, Hisao, c/o SEIKO EPSON CORPORATION, Suwa-Shi, Nagano 392-8502 (JP)
(74) Representative: Sturt, Clifford Mark
(86) International application number: JP0104573
(87) International publication number: WO0193054

(57) **Abstract**

A storage device 5 stores a Web page template 11 defining the basic structure of Web pages to be browsed, and registered user information 12 including information regarding users who will browse the Web pages. A Web page generating unit 6 generates, in response to a request from a user for browsing a Web page, a Web page specific to the user by embedding user-specific information which is obtained by referencing the registered user information 12 into the Web page template 11. A server unit 7 provides the generated user-specific Web page to the user.

The storage area for storing Web pages on a server can be saved. In addition, the number of stored Web pages is small, facilitating the maintenance of the Web pages.

## Description

### Technical Field

The present invention relates to a Web page transmission system and transmission method which are suitable for providing user-specific Web pages on a user-by-user basis via a network.

### Background Art

Various information are made public in the form of Web pages on networks such as the Internet. The Web pages include pages which are allowed to be freely browsed by anyone, and pages which are allowed to be browsed only by specific users. In response to a browsing request for a Web page which is allowed to be browsed only by a specific user; a server requests the user to enter a user code and a password, and if the user code and the password having been entered are found to have been registered on the server, it permits the browsing of the corresponding Web page.

The conventional art described above has involved the following problems to be solved. The Web pages provided by the server include those common to all users and those specific to each user. For example, when Web pages for product quote are provided to customers, different wholesale prices may be set for the same product on a customer-by-customer basis. For example, the wholesale price for a customer A is set to be 10,000 yen, and the wholesale price for a customer B is set to be 9,500 yen. In such a case, the server prepares Web pages specific to each of the users, storing each of the Web pages in a storage device. When user authentication is complete, a corresponding user-specific Web page is retrieved from the storage device using the user code as a key, and the browsing thereof is permitted.

However, as the number of the users increases, the user-specific Web pages increase. This causes the problem that the storage capacity of the storage device for storing the user-specific Web pages needs to be infinitely increased as the number of the users increases. Furthermore, if any change is made to information included in the Web pages, the work of individually modifying all the user-specific Web pages is required, incurring the problem that the load of such maintenance also increases as the quantity of the user-specific Web pages increases.

In order to solve the above problems, the present invention employs the following schemes.

### <Scheme 1>

A Web page transmission system characterized by comprising a storage device for storing a Web page template defining the basic structure of Web pages to be browsed, and registered user information regarding registered users who browse the Web pages; a Web page generating unit for generating, in response to a request for browsing the Web page from the registered user, a user-specific Web page for the user by embedding user-specific information which is obtained by referencing the registered user information into the Web page template; and a server unit for providing the user-specific Web page, having been generated, to the user.

The Web pages provided to each of the users share the same basic structure. The users have been preregistered on the server in order to receive the service of specific Web pages. The user-specific Web page is generated from the Web page template each time in response to a request from a registered user for browsing a Web page. The user-specific information may be obtained directly from the registered user information, or indirectly via other data files. It suffices for the storage device to constantly store the Web page template, not being required to store the user-specific Web page.

### <Scheme 2>

A Web page transmission system characterized by comprising a storage device for storing, when user-specific information is classified into a plurality of groups, group-specific Web pages to be browsed, and registered user information regarding registered users who browse the Web pages; a Web page generating unit for selecting from the group-specific Web page, in response to a request for browsing the Web page from the registered user, a Web page showing user-specific information which is obtained by referencing the registered user information, as a user-specific Web page for the user; and a server unit for providing the user-specific Web page to the user.

In this example, users of the same group share the same user-specific information. The storage device stores Web pages corresponding to the number of groups. The Web page generating unit selects a Web page for a corresponding group from the storage device and uses it as it is as the user-specific Web page.

### <Scheme 3>

A Web page transmission system characterized by comprising a storage device for storing, when user-specific information is classified into a plurality of groups, group-specific Web page templates defining the basic structures of Web pages to be browsed, and registered user information regarding registered users who browse the Web pages; a Web page generating unit for selecting from the storage device, in response to a request for browsing the Web page from the registered user, a user-specific Web page template showing user-specific information which is obtained by referencing the registered user information, and embedding user-specific information which is obtained by referencing the registered user information into the group-specific Web page template, thereby generating a user-specific Web page for the user; and a server unit for providing the user-specific Web page, having been generated, to the user.

In this example, the storage device stores group-specific Web page templates corresponding to the number of groups. The Web page generating unit, in response to a browsing request from a user, selects a group-specific Web page template for the user and adds user-specific information, thereby generating the user-specific Web page. Thus, it suffices for the storage device to store Web page templates corresponding to the number of the groups.

### <Scheme 4>

A Web page transmission method characterized by prestoring in a storage device a Web page template defining the basic structure of Web pages to be browsed, and registered user information regarding registered users who browse the Web pages; generating, in response to a request for browsing the Web page from the registered user, a user-specific Web page for the user by embedding user-specific information which is obtained by referencing the registered user information into the Web page template; and providing the user-specific Web page, having been generated, to the user.

This scheme relates to a Web page transmission method by the system according to Scheme 1.

### <Scheme 5>

A Web page transmission method characterized by prestoring in a storage device, when user-specific information is classified into a plurality of groups, group-specific Web pages to be browsed, and registered user information regarding registered users who browse the Web pages; selecting from the group-specific Web page, in response to a request for browsing the Web page from the registered user, a Web page showing user-specific information which is obtained by referencing the registered user information; and providing the user-specific Web page, having been selected, to the user.

This scheme relates to a Web page transmission method by the system according to Scheme 2.

### <Scheme 6>

A Web page transmission method characterized by storing in a storage device, when user-specific information is classified into a plurality of groups, group-specific Web page templates defining the basic structures of Web pages to be browsed, and registered user information regarding registered users who browse the Web pages; selecting from the storage device, in response to a request for browsing the Web page from the registered user, a user-specific Web page template showing user-specific information which is obtained by referencing the registered user information, and embedding user-specific information which is obtained by referencing the registered user information into the group-specific Web page template, thereby generating a user-specific Web page for the user; and providing the user-specific Web page, having been generated, to the user.

This scheme relates to a Web page transmission method by the system according to Scheme 3.

### <Scheme 7>

A computer-readable storage medium storing a computer program for executing the steps of accessing a storage device storing a Web page template defining the basic structure of Web pages to be browsed, and registered user information regarding registered users who browse the Web pages; generating, in response to a request for browsing the Web page from the registered user, a user-specific Web page for the user by embedding user-specific information which is obtained by referencing the registered user information into the Web page template; and providing the user-specific Web page, having been generated, to the user.

This scheme relates to a computer program for executing the method according to Scheme 4.

### <Scheme 8>

A computer-readable storage medium storing a computer program for executing the steps of accessing a storage device storing, when user-specific information is classified into a plurality of groups, group-specific Web pages to be browsed, and registered user information regarding registered users who browse the Web pages; selecting from the group-specific Web page, in response to a request for browsing the Web page from the registered user, a Web page showing user-specific information which is obtained by referencing the registered user information; and providing the user-specific Web page, having been selected, to the user.

This scheme relates to a computer program for executing the method according to Scheme 5.

### <Scheme 9>

A computer-readable storage medium storing a computer program for executing the steps of accessing a storage device storing, when user-specific information is classified into a plurality of groups, group-specific Web page templates defining the basic structures of Web pages to be browsed, and registered user information regarding registered users who browse the Web pages; selecting from the storage device, in response to a request for browsing the Web page from the registered user, a user-specific Web page template showing user-specific information which is obtained by referencing the registered user information, and embedding user-specific information which is obtained by referencing the registered user information into the group-specific Web page template, thereby generating a user-specific Web page for the user; and providing the user-specific Web page, having been generated, to the user.

This scheme relates to a computer program for executing the method according to Scheme 6.

### Brief Description of the Drawings

Fig. 1 is a block diagram showing a Web page transmission system according to Embodiment 1.
Fig. 2 is an illustration showing the process of generating a user-specific Web page from a Web page template.
Fig. 3 is a flowchart showing the operation in Embodiment 1, from when the user requests browsing of a user-specific Web page to when the user-specific Web page is transmitted to the user.
Fig. 4 is an illustration showing an example of a Web page for user authentication.
Fig. 5 is a schematic illustration of the operation of a system according to Embodiment 2.
Fig. 6 is a flowchart showing the operation in Embodiment 2, from when the user requests browsing of a user-specific Web page to when the user-specific Web page is transmitted to the user.
Fig. 7 is a schematic illustration of the operation of a system according to Embodiment 3.
Fig. 8 is a flowchart showing the operation in Embodiment 3, from when the user requests browsing of a user-specific Web page to when the user-specific Web page is transmitted to the user.

### Best Mode for Carrying Out the Invention

The mode for carrying out the invention will be described below with embodiments thereof.

The present invention is employed in cases where Web pages of a common basic structure but including information specific to each user are transmitted from a server to the user side. For example, a case will be considered in which a product is sold at wholesale prices which differ on a user-by-user basis and each user browses a user-specific Web page including the wholesale price of the product. In this case, a Web page template defining the basic structure of the Web page to be browsed is stored in a storage device. The Web page template is edited specifically for the user when it is transmitted to the user.

### <Embodiment 1>

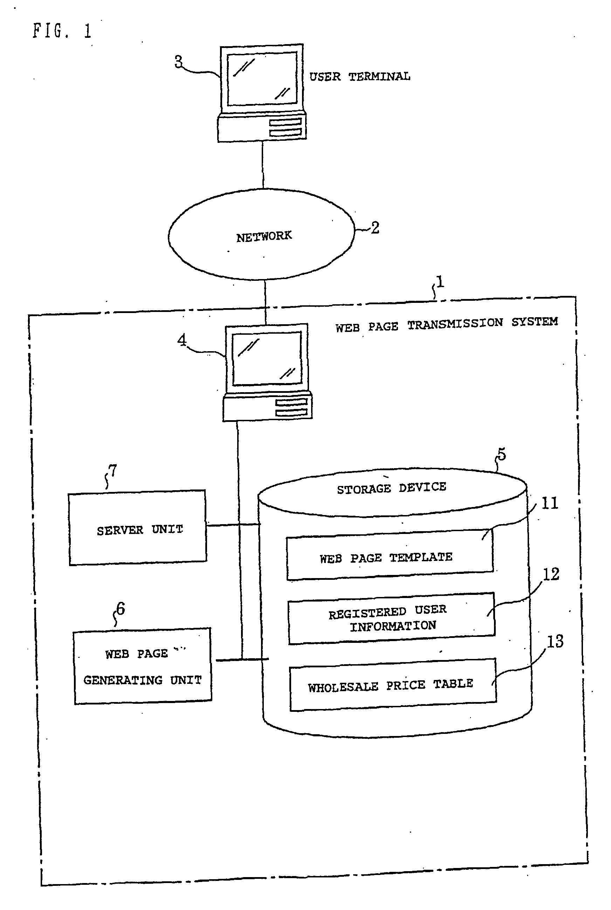

Fig. 1 is a block diagram showing a Web page transmission system according to Embodiment 1.

The Web page transmission system 1, shown in the figure, is connected to a user terminal 3 via a network 2. A server 4 transmits, via the network, a Web page requested by a user, and permits the browsing thereof.

The server 4, as shown in the figure, includes a storage device 5, a Web page generating unit 6, and a server unit 7. The storage device 5 is a memory for storing a Web page template 11 defining the basic structure of Web pages to be browsed, and registered user information 12 including information regarding registered users who will browse the Web pages. The Web page generating unit 6 has the functionality of generating a user-specific Web page with reference to the registered user information 12 by embedding user-specific information included in the registered user information 12 into the Web page template 11, in response to a request from the user terminal 3 for browsing a Web page. This is achieved, for example, by using a computer program, etc. executed by the server 4.

The server unit 7, connected to the network 2, has the functionality of controlling communications and providing the generated user-specific Web page to the corresponding user. This is implemented by a network interface such as a communications controlling apparatus. The Web page template is HTML (Hypertext Markup Language) data which describes only the portion common to all the Web pages. The registered user information 12 includes, for example, user names, user addresses, phone numbers, FAX numbers, user codes, passwords, and rank information indicating the rank of wholesale prices set for each user. In order to define the relationship between the rank information and the wholesale prices, the storage device 5 stores a data file referred to as a wholesale price table 13.

For example, let it be assumed that the wholesale prices are divided into five ranks as follows:
(1) Rank R1 is 10,000 yen;
(2) Rank R2 is 9,500 yen;
(3) Rank R3 is 9,000 yen;
(4) Rank R4 is 8,500 yen; and
(5) Rank R5 is 8,000 yen.

Let it also be supposed that, for example, there are ten users; T1, T2, T3, T4, T5, T6, T7, T8, T9, and T10.

The wholesale prices are set for each of the users as follows:
(1) User T1 belongs to rank R1;
(2) Users T2 and T3 belong to rank R2;
(3) Users T4, T5, and T6 belong to rank R3;
(4) Users T7, T8, and T9 belong to rank R4; and
(5) User T10 belongs to rank R5.

Conventionally, if there are ten users, user-specific Web pages for the ten users are respectively prepared and stored in a storage device. In response to a request from one of the users for browsing a user-specific Web page, the corresponding Web page is retrieved and transmitted to the user. However, the storage device constantly needs to store fifty user-specific Web pages if there are fifty users, and one hundred pages if there are one hundred users.

According to the present invention, the rank information indicating the rank of the wholesale prices set for each of the users is included in the registered user information for the ten users T1 to T10. For example, the rank information of the user T1 is R1 and the rank information of the user T3 is R2.

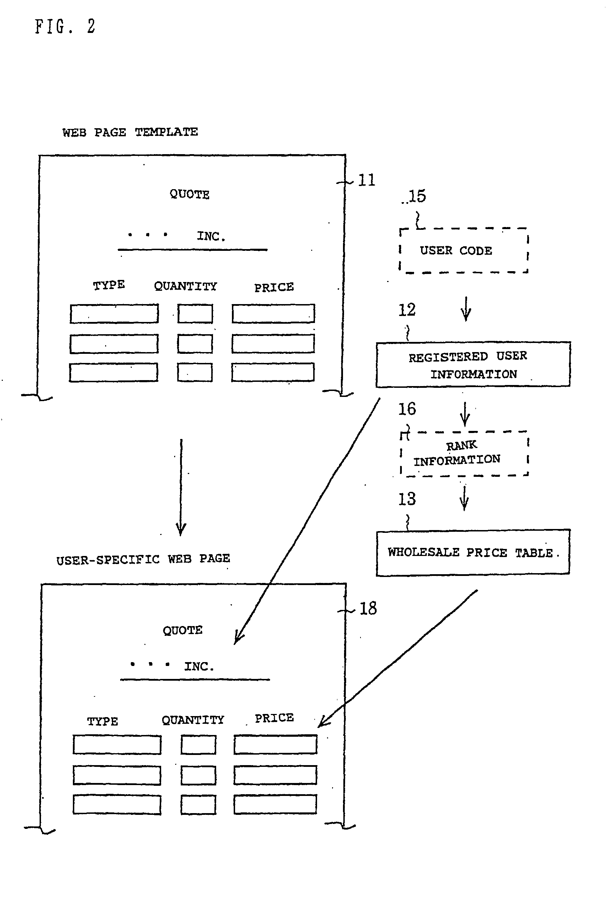

Fig. 2 is an illustration showing the process of generating a user-specific Web page from a Web page template.

Referring to the figure, the relationship between the Web page template 11, the user-specific Web page 18, the registered user information 12, and the wholesale price table 13, will be described. First, in response to a browsing request from a user, the user code 15 of the user is obtained. Then, the rank information 16 in the registered user information 12 is obtained using the user code 15.

Then, the wholesale price corresponding to the rank information 16 is obtained using the wholesale price table 13. Using all the above information, the Web page template 11 is processed. Thus, for example, the user name, the user code, and the wholesale price defined on a user-by-user basis is included in the user-specific Web page 18.

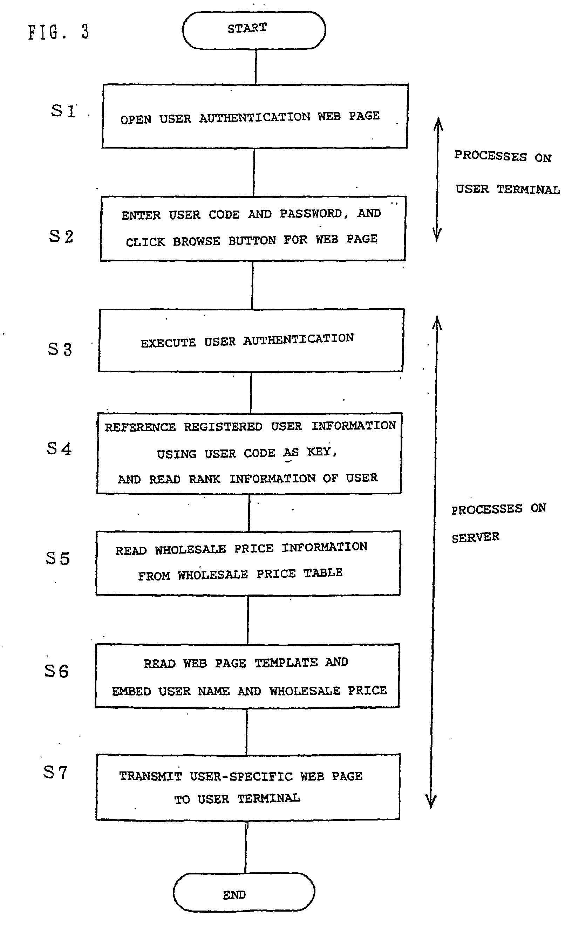

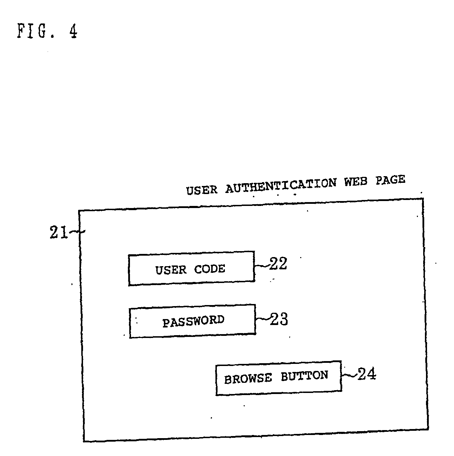

Fig. 3 is a flowchart showing the operation from when the user requests browsing of the user-specific Web page to when the user-specific Web page is transmitted to the user. Fig. 4 is an illustration showing a Web page for user authentication.

Step S1 and step S2 are processes on the user terminal 3, and step S3 and steps thereafter are processes on the server. First, in step S1, the user uses a browser on the user terminal 3 (Fig. 1) to open the user authentication Web page 21 (Fig. 4). In step S2, the user enters a user code 22 and a password 23 in the user authentication Web page 21. The user authentication Web page 21 is a page for permitting the browsing of a Web page by a specific user in the above manner, and it includes text boxes for entering the user code 22 and the password 23, and a browse button 24.

The user clicks on the browse button 24 for the user-specific Web page, included in the user authentication Web page 21. In step S3 shown in Fig. 3, the server unit 7 (Fig. 1) executes the authentication of the user. When the user authentication is complete, the process of generating the user-specific Web page 18 (Fig. 2) begins. In step S4, the registered user information 12 is referenced using the user code 15, having been entered, as a key. The rank information 16 of the user is thus read. In step S5, information of the corresponding wholesale price is read from the wholesale price table 13 using the rank information 16 as a key. The information is read such that, for example, the wholesale price is 9,500 yen for user T3, who belongs to rank R2.

In step S6, the Web page template 11 is read, and the user name and the wholesale price are embedded therein. In the Web page template 11, for example, at the positions where the wholesale price, the user name, etc. are to be entered, symbols identifying the positions are prestored. When the Web page template is edited, the symbols are searched on the Web page template and are replaced with the corresponding user-specific data. The Web page template is thus converted into the user-specific Web page. In step S7, the user-specific Web page 18, having been generated, is transmitted to the user terminal 3.

As described above, according to this embodiment, a single Web page template for quoting is provided, and in response to a request from a user for browsing a user-specific Web page, user-specific information which is obtained by searching user information and rank information of the user is embedded in the Web page template to generate the user-specific Web page, advantageously minimizing the amount of data to be stored in the storage device.

### <Embodiment 2>

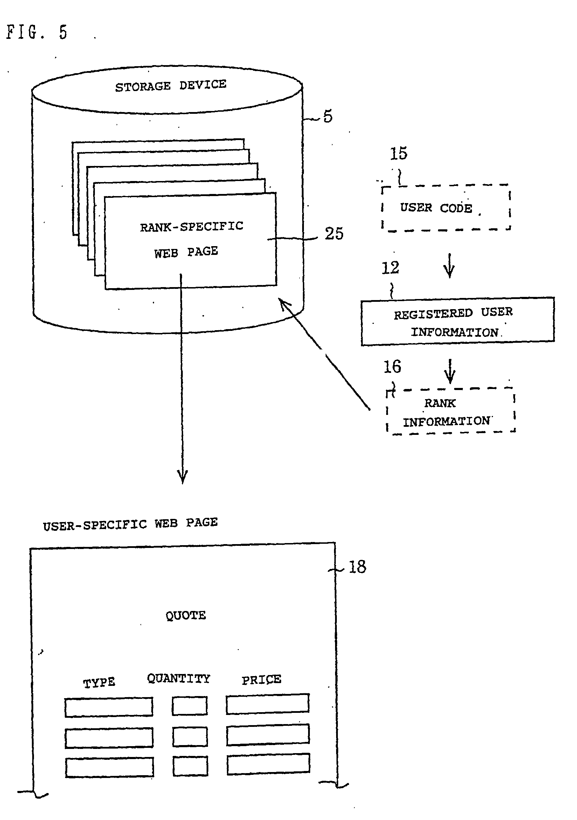

Fig. 5 is a schematic illustration of the operation of a system according to Embodiment 2.

In this embodiment, rank-specific Web pages 25 corresponding to different wholesale prices are stored in the storage device 5.

The storage device 5 stores five different Web pages as follows:
(1) Web page for rank R1
(2) Web page for rank R2
(3) Web page for rank R3
(4) Web page for rank R4
(5) Web page for rank R5

The configuration of the system is otherwise identical to the embodiment shown in Fig. 1. Referring to Fig. 5, in response to a browsing request from a user, the user code 15 of the user is obtained. Then, using the user code 15, the rank information 16 in the registered user information 12 is obtained. Then, using the rank information 16, a rank-specific Web page 25 showing the corresponding wholesale price is retrieved from the storage device 5. The server transmits the Web page to the user without processing it.

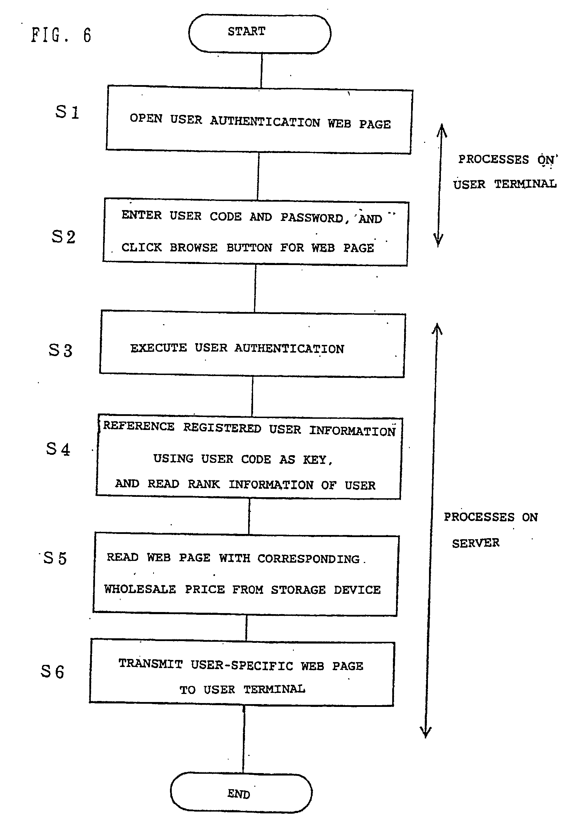

Fig. 6 is a flowchart showing the operation from when the user requests browsing of the user-specific Web page to when the user-specific Web page is transmitted to the user.

In step S1 to step S4 shown in the figure, the same processes as in the flowchart shown in Fig. 3 are executed. Step S5 and steps thereafter are different. In step S5, using the rank information 16, the corresponding rank-specific Web page 25 is retrieved from the storage device 5. In step S6, the Web page is transmitted to the user terminal.

In this case, although the Web page is a user-specific Web page, it does not include information such as the user name. That is, all the users of the same rank view the same Web page. Although the description deals with the rank as an example, as long as user-specific information can be classified into several different groups, the above object can be achieved by storing group-specific Web pages. The method does not require the processing of the Web pages, advantageously minimizing the load on the server. In addition, the number of different wholesale prices is significantly less than the number of users, and it is unlikely to increase rapidly, advantageously minimizing the number of Web pages to be stored.

### <Embodiment 3>

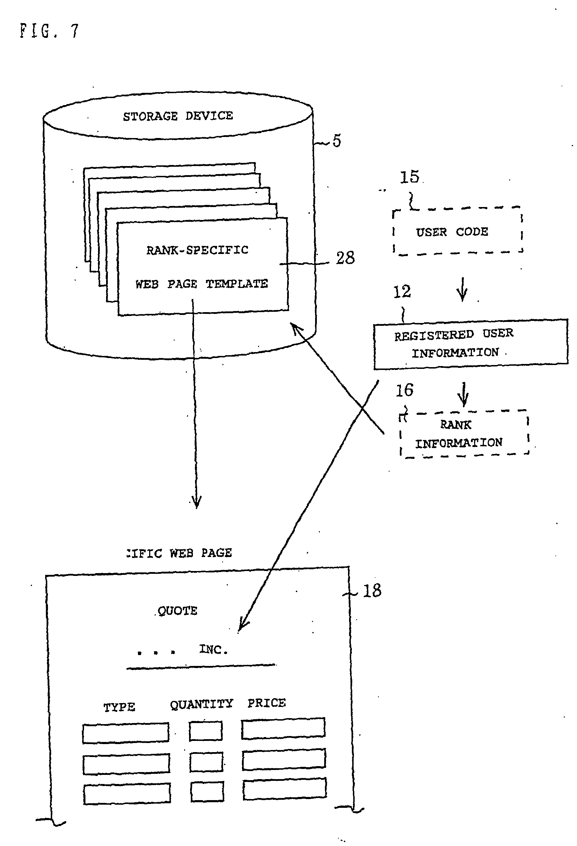

Fig. 7 is a schematic illustration of the operation of a system according to Embodiment 3.

This embodiment is a combination of Embodiment 1 and Embodiment 2. In this embodiment, similarly to Embodiment 2 shown in Fig. 5, rank-specific Web page templates 28 corresponding to different wholesale prices are stored in the storage device 5.

The storage device 5 stores five different Web pages as follows:
Web page template for rank R1
Web page template for rank R2
Web page template for rank R3
Web page template for rank R4
Web page template for rank R5

In response to a browsing request from a user, the user code 15 of the user is obtained. Then, using the user code, the rank information 16 in the registered user information 12 is obtained. Then, using the rank information, a rank-specific Web page template 28 showing the corresponding wholesale price is retrieved from the storage device 5. With reference to the registered user information 12, the server embeds user-specific information such as the user name in the rank-specific Web page template 28 and then transmits it to the user.

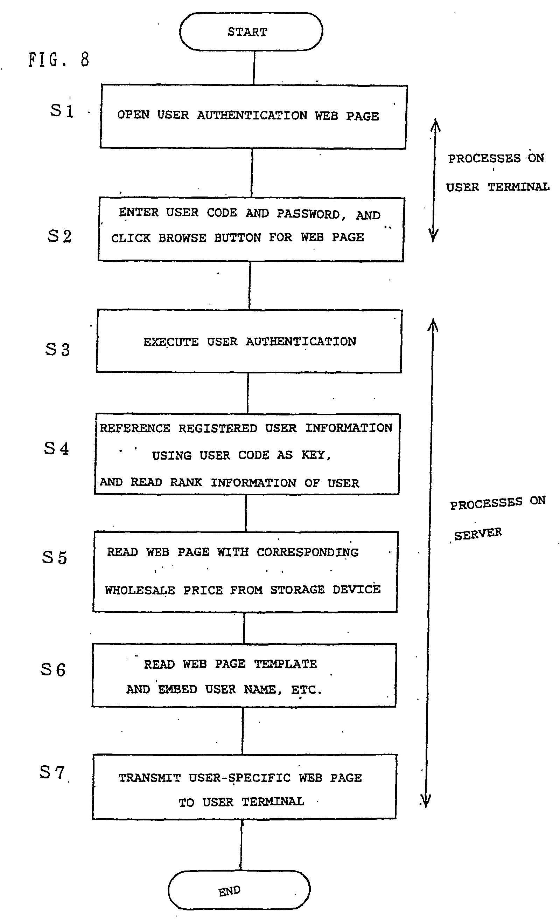

Fig. 8 is a flowchart showing the operation from when the user requests browsing of the user-specific Web page to when the user-specific Web page is transmitted to the user. In step S1 to step S5 shown in the figure, the same processes as in the flowchart shown in Fig. 6 are executed. In step S5, using the rank information 16, the corresponding rank-specific Web page template 28 is retrieved from the storage device 5. In step S6, user-specific information, for example, a user name, etc., is embedded in the rank-specific Web page template 28. Then, in step S7, the Web page is transmitted to the user terminal.

As described above, according to this embodiment, Web page templates corresponding to different wholesale prices are stored, and a simple process for adding user-specific information to the Web page templates is executed to generate a user-specific Web page, advantageously minimizing the amount of data to be stored, similarly to Embodiment 2, and facilitating the processing of the Web page templates.

The present invention is not limited to the above-described embodiments.

The user may be anyone who browses and uses a Web page, for example, a customer or client who purchases a product using the Web page, or one who is not a customer or the like but who just receives an information service using the Web page. The Web page may include data for various information in any format, and the contents and the data structure thereof may be arbitrary.

Furthermore, as an alternative to the (rank-specific) wholesale price table including information of the wholesale price for each of the products, a (rank-specific) discount rate table including information of the discount rate for each of the products may be provided. In this case, the individual products may be grouped into several groups, the (rank-specific) discount rate being determined for each of the groups. In addition, the same discount rate may be set for all the products of the same rank.

The computer to be used in the above-described embodiments includes hardware of a known configuration in which a processor executes a program stored in a storage device. Since the configuration is apparent, the illustrations focus on the functional blocks which are necessary for the description of the present invention, and detailed illustrations of the hardware are omitted. Each of the functional blocks shown in the figures may be implemented by an independent program module or by an integrated program module. Furthermore, all or part of the functional blocks may be implemented in hardware using logic circuits. Furthermore, each of the program modules may be embedded in and executed on an existing application program, or may be executed as an independent program.

The present invention can be implemented by installing each of the program modules on the computer. Each of the program modules may be stored on a computer-readable storage medium, for example, a CD-ROM, and installed therefrom onto the computer, or may be downloaded via a network to a memory in the computer. Furthermore, the program for implementing the present invention may be executed by a single computer, or by distributed processing using a plurality of computers.

As described above, by generating user-specific Web pages using Web page templates, etc., the storage area for storing the Web pages on the server can be saved. Furthermore, the number of stored Web pages is small, advantageously facilitating the maintenance of the Web pages.

## Claims

1. A Web page transmission system **characterized by** comprising:
a storage device for storing a Web page template defining the basic structure of Web pages to be browsed, and registered user information regarding registered users who browse said Web pages;
a Web page generating unit for generating, in response to a request for browsing said Web page from said registered user, a user-specific Web page for said user by embedding user-specific information which is obtained by referencing said registered user information into said Web page template; and
a server unit for providing said user-specific Web page, having been generated, to said user.

2. A Web page transmission system **characterized by** comprising:
a storage device for storing, when user-specific information is classified into a plurality of groups, group-specific Web pages to be browsed, and registered user information regarding registered users who browse said Web pages;
a Web page generating unit for selecting from said group-specific Web pages, in response to a request for browsing said Web page from said registered user, a Web page showing user-specific information which is obtained by referencing said registered user information, as a user-specific Web page for said user; and
a server unit for providing said user-specific Web page to said user.

3. A Web page transmission system **characterized by** comprising:
a storage device for storing, when user-specific information is classified into a plurality of groups, group-specific Web page templates defining the basic structures of Web pages to be browsed, and registered user information regarding registered users who browse said Web pages;
a Web page generating unit for selecting from said storage device, in response to a request for browsing said Web page from said registered user, a user-specific Web page template showing user-specific information which is obtained by referencing said registered user information, and embedding user-specific information which is obtained by referencing said registered user information into said group-specific Web page template, thereby generating a user-specific Web page for said user; and
a server unit for providing said user-specific Web page, having been generated, to said user.

4. A Web page transmission method **characterized by**:
prestoring in a storage device a Web page template defining the basic structure of Web pages to be browsed, and registered user information regarding registered users who browse said Web pages;
generating, in response to a request for browsing said Web page from said registered user, a user-specific Web page for said user by embedding user-specific information which is obtained by referencing said registered user information into said Web page template; and
providing said user-specific Web page, having been generated, to said user.

5. A Web page transmission method **characterized by**:
prestoring in a storage device, when user-specific information is classified into a plurality of groups, group-specific Web pages to be browsed, and registered user information regarding registered users who browse said Web pages;
selecting from said group-specific Web pages, in response to a request for browsing said Web page from said registered user, a Web page showing user-specific information which is obtained by referencing said registered user information; and
providing said user-specific Web page, having been selected, to said user.

6. A Web page transmission method **characterized by**:
storing in a storage device, when user-specific information is classified into a plurality of groups, group-specific Web page templates defining the basic structures of Web pages to be browsed, and registered user information regarding registered users who browse said Web pages;
selecting from said storage device, in response to a request for browsing said Web page from said registered user, a user-specific Web page template showing user-specific information which is obtained by referencing said registered user information, and embedding user-specific information which is obtained by referencing said registered user information into said group-specific Web page template, thereby generating a user-specific Web page for said user; and
providing said user-specific Web page, having been generated, to said user.

7. A computer-readable storage medium storing a computer program for executing the steps of:
accessing a storage device storing a Web page template defining the basic structure of Web pages to be browsed, and registered user information regarding registered users who browse said Web pages;
generating, in response to a request for browsing said Web page from said registered user, a user-specific Web page for said user by embedding user-specific information which is obtained by referencing said registered user information into said Web page template; and
providing said user-specific Web page, having been generated, to said user.

8. A computer-readable storage medium storing a computer program for executing the steps of:
accessing a storage device storing, when user-specific information is classified into a plurality of groups, group-specific Web pages to be browsed, and registered user information regarding registered users who browse said Web pages;
selecting from said group-specific Web page, in response to a request for browsing said Web page from said registered user, a Web page showing user-specific information which is obtained by referencing said registered user information; and
providing said user-specific Web page, having been selected, to said user.

9. A computer-readable storage medium storing a computer program for executing the steps of:
accessing a storage device storing, when user-specific information is classified into a plurality of groups, group-specific Web page templates defining the basic structures of Web pages to be browsed, and registered user information regarding registered users who browse said Web pages;
selecting from said storage device, in response to a request for browsing said Web page from said registered user, a user-specific Web page template showing user-specific information which is obtained by referencing said registered user information, and embedding user-specific information which is obtained by referencing said registered user information into said group-specific Web page template, thereby generating a user-specific Web page for said user; and
providing said user-specific Web page, having been generated, to said user.
